# EUROPÄISCHE PATENTSCHRIFT

(11) **EP 0 863 384 B1**
(45) Veröffentlichungstag und Bekanntmachung des Hinweises auf die Patenterteilung: **06.11.2002**
(21) Anmeldenummer: 98103698.1
(22) Anmeldetag: 03.03.1998
(51) Int. Cl.: G01D 5/249, G01D 5/14

(54) **Schaltungsanordnung und Verfahren zum Betrieb für einen Positionsgeber mit Hall-Elementen**
Circuit and method for the operation of a position sensor using Hall elements
Circuit et procédé d'opération d'un capteur de position utilisant des éléments à effet Hall

(30) Priorität: 06.03.1997 DE 19709087
(43) Veröffentlichungstag der Anmeldung: 09.09.1998
(73) Patentinhaber: Dr. Johannes Heidenhain GmbH, 83292 Traunreut (DE)
(72) Erfinder: Strasser, Erich, Dipl.-Ing., 83308 Trostberg (DE)

(56) Entgegenhaltungen:
- EP-A- 0 331 828
- EP-A- 0 620 647
- US-A- 4 728 950

## Beschreibung

Die Erfindung betrifft ein Verfahren zum Betrieb eines Positionsgebers, vorzugsweise eines Drehgebers, der Hall-Elemente aufweist, nach dem Oberbegriff des Anspruchs 1 und einen Positionsgeber gemäß dem Oberbegriff von Anspruch 10 zur Durchführung des Verfahrens.

Aus der US 4 728 950 ist ein Positionsgeber bekannt, wobei die Position des magnetischen Zeigers einer Meßeinrichtung auf einer Kreisskala mit Hilfe von um die Rotationsachse des Zeigers konzentrisch angeordneten Hall-Elementen bestimmt wird.

Aus dem Stand der Technik sind bereits seit langem Drehgeber bekannt, die eine magnetische Teilung mit einer Codestruktur aufweisen. Gemäß der DE 44 42 371 A1 der Anmelderin zeichnen sich derartige Teilungen durch eine mehrspurige alternierende Magnetisierung eines rotationssymmetrischen Körpers aus, der sich proportional der dem Drehgeber zugeführten Drehbewegung dreht. Diese alternierende Magnetisierung wird bei einer Drehbewegung durch statische Hall-Elemente für jede Spur der Teilung detektiert und als absolutes Positionssignal ausgegeben.

Aus der EP 0 331 828 A1 ist ein Multiturngeber bekannt, der sich im Prinzip aus zwei Meßsystemen zusammensetzt. Es wird durch ein inkrementales optisches Meßsystem die genaue Position im Bereich von einer 360°-Drehung der optischen Teilung bestimmt und zusätzlich die Anzahl der Umdrehungen der optischen Teilung mit Hilfe eines magnetischen Detektors ermittelt. Daraus kann dann eine Steuereinheit die absolute Position auch bei mehreren Umdrehungen des Drehgebers ermitteln. Wird der Multiturngeber mit der Versorgungsspannung verbunden, wird die gespeicherte Anzahl Umdrehungen und der gespeicherte Inkrementalwert ausgegeben. Um den Verbrauch an elektrischer Leistung zu reduzieren, werden magnetoresistive Elemente mit einigen Hundert Kiloohm Innenwiderstand verwendet und zusätzliche Widerstände in Reihe geschaltet. Weiterhin werden digitale Baugruppen, die in CMOS-Technologie gefertigt wurden, verwendet.

Dabei ist von Nachteil, daß der Bedarf an elektrischer Leistung von CMOS-Baugruppen proportional mit der Frequenz steigt, so daß bei einer hohen Verarbeitungsgeschwindigkeit auch der Bedarf an elektrischer Leistung groß ist. Weiterhin sind spezielle magnetoresistive Elemente mit einem hohen Innenwiderstand erforderlich, die eine aufwendige Weiterverarbeitung ihres Ausgangssignals notwendig machen, was zu einer erhöhten Störempfindlichkeit führt.

Aus der EP 0 158 781 A1 ist ein inkrementaler Drehgeber bekannt, bei dem mit einem optischen Meßsystem die Position bzw. der Drehwinkel bestimmt wird. Das optische Meßsystem weist dabei eine Lichtquelle, eine statische und eine rotierende Teilung sowie lichtempfindliche Baugruppen mit zugehöriger Auswerteelektronik auf. Zur Energieeinsparung werden die Lichtquelle und die Auswerteelektronik nur so lange mit der Versorgungsspannung verbunden, wie zur Feststellung der Position innerhalb der kleinsten Teilungsperiode benötigt wird. In der übrigen Zeit werden diese Baugruppen von der Energieversorgung getrennt.

Dabei ist von Nachteil, daß bei Verwendung eines magnetischen Detektorsystems aufgrund der dafür erforderlichen wesentlich größeren Stromstärken in der gesamten Schaltungsanordnung bei einer nur kurzzeitigen Verbindung der Lichtquelle und der Auswerteelektronik mit der Versorgungsspannung Störungen auftreten.

Der Erfindung liegt daher die Aufgabe zugrunde, einen Positionsgeber mit magnetischem Meßsystem derart auszugestalten und ein Verfahren zu dessen Betrieb anzugeben, daß der Bedarf an elektrischer Leistung wesentlich reduziert wird, wobei sichergestellt sein muß, daß dadurch keine Störungen verursacht werden.

Diese Aufgabe wird durch die Merkmale der unabhängigen Ansprüche 1 und 10 gelöst.

Den abhängigen Ansprüchen sind weitere vorteilhafte Ausgestaltungen zu entnehmen.

Das erfindungsgemäße Verfahren zum Betrieb eines Positionsgebers weist den Vorteil auf, daß die zur Detektion einer Position vorgesehenen Hall-Elemente nicht gleichzeitig, sondern in einer bestimmten Reihenfolge nacheinander eingeschaltet, abgefragt und wieder ausgeschaltet werden. Da der maximale Strombedarf der gesamten Schaltungsanordnung im wesentlichen durch den Strombedarf der Hall-Elemente bestimmt wird, kann durch die sequentielle Abfrage der einzelnen Hall-Elemente der maximale Strombedarf wesentlich verringert werden.

Weiterhin werden nur eine kleine Anzahl Hall-Elemente gleichzeitig geschaltet, wodurch die durch den Schaltvorgang bedingten Störungen im elektrischen Leitungsnetz praktisch nicht mehr auftreten. Weiterhin von Vorteil ist die zeitverzögerte Speicherung des Ausgangssignals eines jeden Hall-Elements, wodurch Störungen, welche in einer Stabilisierungsphase der Hall-Elemente auftreten, unterdrückt werden. Der erfindungsgemäße Positionsgeber weist den Vorteil auf, daß einzelne Hall-Elemente über eine individuelle Steuerleitung von einer Steuereinheit aktiviert und deaktiviert werden können. Weiterhin kann jede Speicherbaugruppe separat von der Steuereinheit angesteuert werden.

Das erfindungsgemäße Verfahren und der erfindungsgemäße Positionsgeber sollen nun anhand der Zeichnungen näher beschrieben und erläutert werden. Es zeigen:
- Fig. 1:: eine mögliche schaltungstechnische Realisierung des erfindungsgemäßen Positionsgebers,
- Fig. 2:: eine mögliche Realisierung einer magnetischen Teilung mit Codestruktur,
- Fig. 3a:: ein möglicher Verlauf von Steuersignalen für die Hall-Elemente,
- Fig. 3b:: ein weiterer möglicher Verlauf von Steuersignalen für Hall-Elemente und
- Fig. 4:: ein mögliches Verlauf von geschwindigkeitsabhängigen Steuersignalen zur Abschaltung einzelner Hall-Element.

Das erfindungsgemäße Verfahren und der erfindungsgemäße Positionsgeber sollen beispielhaft an einem Multiturn-Drehgeber erläutert werden, der unmittelbar einen parallelen Code ausgibt und neben mindestens einer magnetischen Teilung mit Codestruktur auch mindestens eine optische Teilung aufweist, die sowohl eine Codestruktur als auch eine inkrementale Struktur aufweisen kann. Es ist jedoch für den Fachmann offensichtlich, daß das erfindungsgemäße Verfahren ebenso bei Positionsgebern für Längenmeßsysteme, bei Singleturn-Drehgebern oder bei Meßsystemen, die einen inkrementalen Wert ausgeben, eingesetzt werden kann.

Die zu messende Drehbewegung wird in einem ersten Schritt auf eine optische Teilung des Drehgebers übertragen, welche mehrere Teilungsspuren aufweist, die gemäß einem Code ausgebildet sind. Dadurch werden die niederwertigsten Bits des Ausgangssignals des Drehgebers erzeugt. Durch die optische Teilung wird somit ein Singleturn-Drehgeber mit beispielsweise sechs Bit Auflösung realisiert.

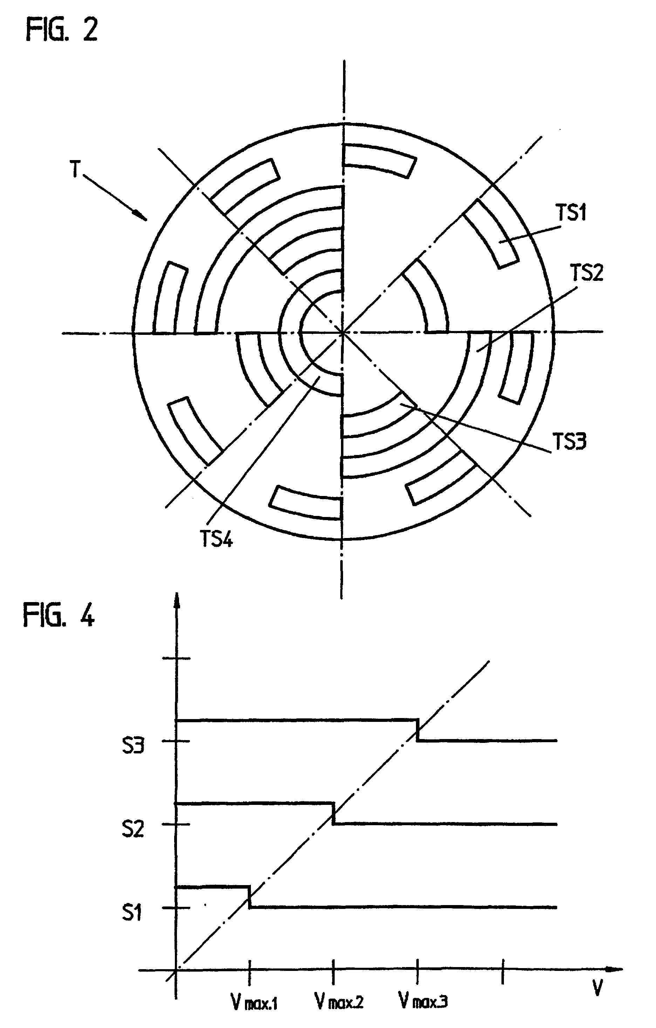

Anschließend wird die Drehbewegung der optischen Teilung durch ein Getriebe um den Faktor 1:2⁶ untersetzt und einer magnetischen Teilung T zugeleitet, die in Fig. 2 dargestellt ist. Das Untersetzungsverhältnis entspricht dabei der Auflösung der optischen Teilung, so daß das höchstwertige Bit der optischen Teilung die halbe Wertigkeit des niederwertigsten Bits der magnetischen Teilung T aufweist. Die magnetische Teilung T wird in der Regel prinzipiell identisch der optischen Teilung, gemäß einem digitalen Code, z.B. dem Gray-Code, ausgestaltet.

Unmittelbar über den einzelnen Teilungsspuren TS1 bis TS4 der magnetischen Teilung T sind Hall-Elemente statisch angeordnet, die detektieren, welche Magnetisierung die darunterliegende Teilungsspur gerade aufweist. Die Hall-Elemente geben ein Ausgangssignal aus, welches entsprechend der Magnetisierung der Teilungsspur zwei Zustände aufweist. Da die Teilungsperioden der Teilungsspuren TS1 - TS4 sich immer um den Faktor 2 unterscheiden, unterscheidet sich auch die Wertigkeit der Ausgangssignale der Hall-Elemente, entsprechend der Teilungsperiode, um der Faktor 2. Die Hall-Elemente sind derart über den einzelnen Teilungsspuren TS1 - TS4 angeordnet, daß das Ausgangssignal des Hall-Elements HE1 die niedrigste Wertigkeit aufweist, da es über der Teilungsspur TS1 mit der kürzesten Teilungsperiode angeordnet ist. Die Numerierung der Hall-Elemente wurde so gewählt, daß die Wertigkeit des Ausgangssignals des Hall-Elements durch dessen Nummer zum Ausdruck kommt, so daß das Ausgangssignal mit der höchsten Wertigkeit vom Hall-Element HE18 ausgegeben wird.

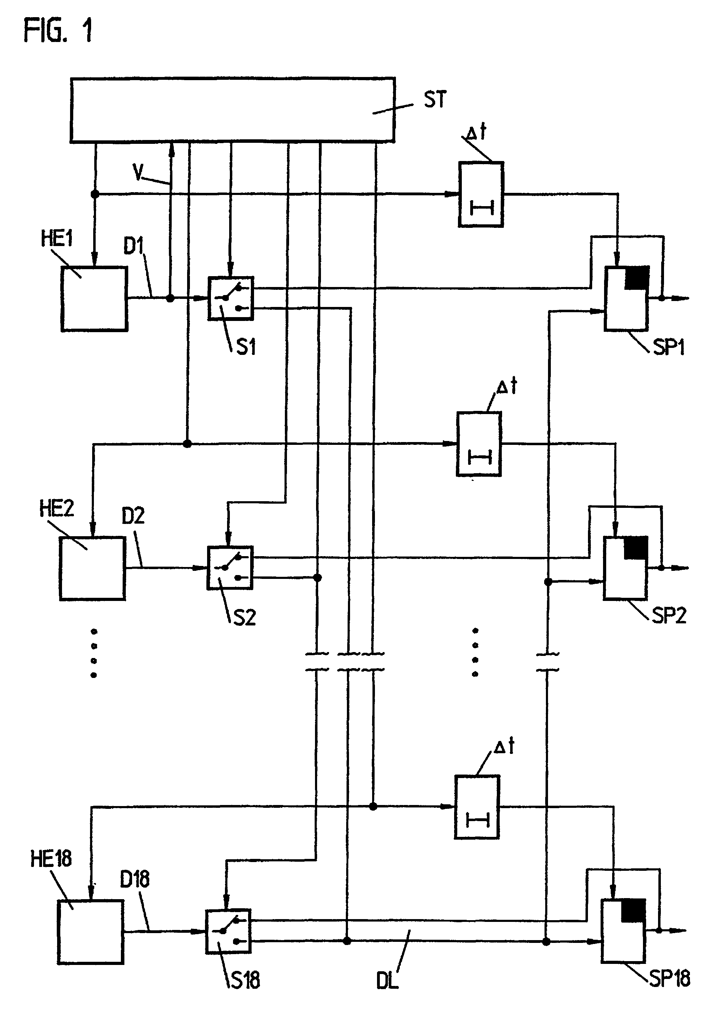

Wie in Fig. 1 dargestellt, werden die Ausgangssignale der Hall-Elemente HE1 - HE18 jeweils einem Schalter S1 - S18 zugeleitet, durch den die Ausgangssignale D1 - D18 entweder dem Eingang von Speicherbaugruppen SP1 - SP18 zugeleitet werden oder direkt als Ausgangssignale des Drehgebers bereitgestellt werden. Wie viele Schalter vorzusehen sind, ist abhängig von der maximalen Geschwindigkeit V der Positionsänderung, also der maximalen Drehzahl der Drehgebers, und der Verarbeitungsgeschwindigkeit der verwendeten Baugruppen.

Jedes Hall-Element HE1 - HE18 wird über eine Steuerleitung mit einer Steuereinheit ST verbunden, die dadurch jedes einzelne Hall-Element HE1 - HE18 ein- und ausschalten kann. Es liegt auf der Hand, daß ein ausgeschaltetes bzw. deaktiviertes Hall-Element keine Stromaufnahme aufweist und somit der Strombedarf durch das Deaktivieren von Hall-Elementen verringert wird. Auch die Schalter S1 - S18 sind über Steuerleitungen mit der Steuereinheit ST verbunden und werden von dieser umgeschaltet. Weiterhin sind die Speicherbaugruppen SP1 - SP18 über je eine Steuerleitung entweder direkt mit der Steuereinheit ST verbunden, oder es wird das Steuersignal für die Speicherbaugruppen SP1 - SP18 aus dem Steuersignal des jeweils zugeordneten Hall-Elements HE1 HE18 durch eine Zeitverzögerung Δt erzeugt.

Im folgenden soll die Arbeitsweise des erfindungsgemäßen Drehgebers erläutert werden. Nachdem die Steuereinheit ST des Drehgebers an die Versorgungsspannung angeschlossen wurde, ermittelte die Steuereinheit ST durch Abfrage eines jeden Hall-Elements HE1 - HE18 in einer bestimmten, gespeicherten Reihenfolge die absolute Position des Drehgebers.

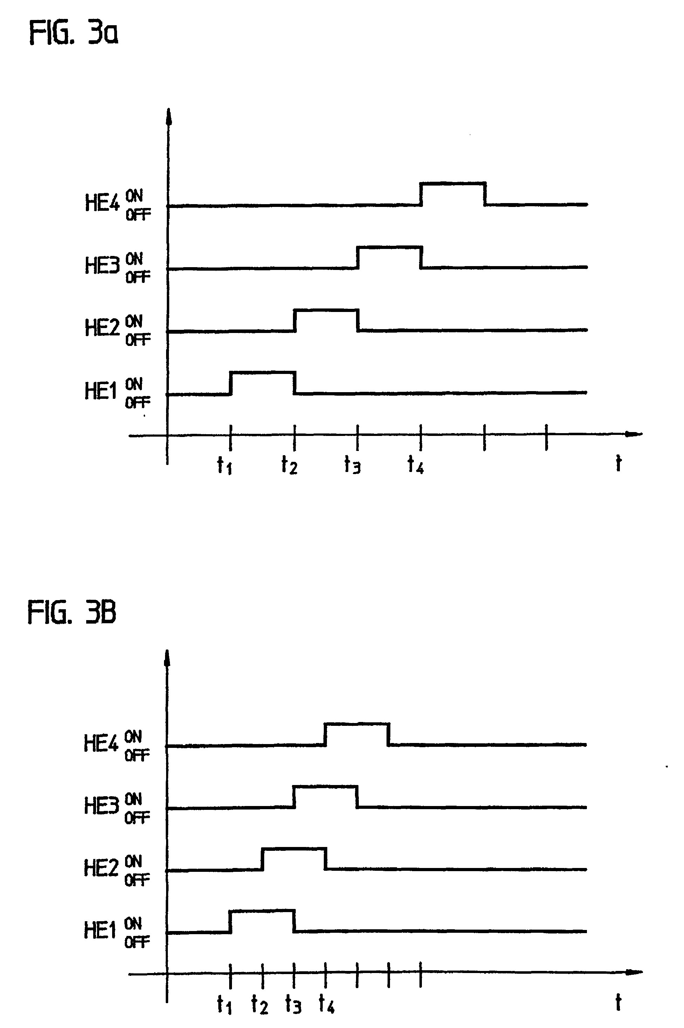

Hierfür deaktiviert die Steuereinheit ST über die jeweiligen Steuerleitungen die Hall-Elemente HE2 - HE18 und aktiviert das Hall-Element HE1. Dies geschieht zum Zeitpunkt t1, wie Fig. 3a zu entnehmen ist, wo exemplarisch die Steuersignale der Steuereinheit ST für die Hall-Elemente HE1 - HE4 über der Zeit aufgetragen sind. Durch die Deaktivierung wird der Strombedarf der gesamten Schaltungsanordnung, der wesentlich durch den Strombedarf der Hall-Elemente HE1 - HE18 bestimmt wird, drastisch verringert. Weiterhin werden durch die Steuereinheit ST die Schalter S1 - S18 zunächst so geschaltet, daß die Ausgangssignale D1 - D18 der Hall-Elemente HE1 - HE18 den Speicherbaugruppen SP1 - SP18 zugeleitet werden. Dabei wird davon ausgegangen, daß die Geschwindigkeit der Positionsänderung nicht über einem Schwellwert liegt. Nach einer bestimmten Zeit, die erforderlich ist, damit am Eingang der Speicherbaugruppe SP1 ein stabiles Ausgangssignal D1 des Hall-Elements HE1 vorliegt, wird vorzugsweise über die Zeitverzögerung Δt oder über eine separate Steuerleitung der Steuereinheit ST die dem Hall-Element HE1 zugeordnete Speicherbaugruppe SP1 angesteuert, um das Ausgangssignal D1 des Hall-Elements HE1 zu speichern. Das Ausgangssignal D1 wird dabei über die Datenleitung DL übertragen. Danach wird das Hall-Element HE1 durch die Steuereinheit ST zum Zeitpunkt t2 deaktiviert, wie Fig. 3a zu entnehmen ist, wodurch diese Baugruppe keinen Strom mehr benötigt.

Danach wiederholt die Steuereinheit ST diesen Vorgang für das nächste Hall-Element HE2. Dieses wird zum Zeitpunkt t2 von der Steuereinheit ST aktiviert und die zugeordnete Speicherbaugruppe SP2 wird mit einer Zeitverzögerung ebenfalls aktiviert. Anschließend wird das Ausgangssignal D2 des Hall-Elements HE2 in der Speicherbaugruppe SP2 gespeichert und das Hall-Element HE2 wird zum Zeitpunkt t3 von der Steuereinheit ST deaktiviert. Dieser Vorgang wiederholt sich so oft, bis die Ausgangssignale aller Hall-Elemente HE1 - HE18 in der jeweils zugeordneten Speicherbaugruppe SP1 - SP18 gespeichert wurden. Die Speicherbaugruppen SP1 - SP18 werden dabei vorteilhaft als Flip-Flops ausgeführt, welche das gespeicherte Bit bis zu einer erneuten Aktivierung nicht ändern und als Ausgangssignal des Drehgebers in paralleler Form bereitstellen.

Da zusätzlich eine optische Teilung vorgesehen ist, die eine wesentlich höhere Auflösung aufweist, besteht auch die Möglichkeit, daß die Positionsbestimmung mit Hilfe der Hall-Elemente nur dann erfolgt, wenn die absolute Position ermittelt werden muß, beispielsweise wenn der Drehgeber eingeschaltet wird oder daß die Hall-Elemente nur in bestimmten Zeitintervallen zur Positionsbestimmung benutzt werden. Im Dauerbetrieb kann zur absoluten Positionsbestimmung auch die Umdrehungszahl der optischen Teilung von der Steuereinheit ST mitgezählt werden.

Alternativ besteht die Möglichkeit, daß nicht, wie oben beschrieben, immer nur ein Hall-Element nach dem anderen Hall-Element zu den Zeitpunkten t1, t2, t3 usw. aktiviert wird, wodurch immer nur ein einziges Hall-Element gleichzeitig aktiviert ist, sondern daß mehrere Hall-Elemente gleichzeitig aktiviert werden. Dabei ist jedoch zu beachten, daß dann nicht mehr nur eine einzige Datenleitung DL zwischen Hall-Elementen HE1 - HE18 und Speicherbaugruppen SP1 - SP18 erforderlich ist, sondern für jede Kombination aus Hall-Element und zugeordneter Speicherbaugruppe eine separate Datenleitung vorzusehen ist.

Ein weitere Alternative besteht darin, das nächste Hall-Element bereits zu einem Zeitpunkt t2 zu aktivieren, bevor das vorhergehende Hall-Element HE1 zum Zeitpunkt t3 deaktiviert wurde, wie in Fig. 3b dargestellt. Dadurch werden die Hall-Elemente und zugeordneten Speicherbaugruppen nacheinander aktiviert, es wird nicht gewartet, bis das vorher aktivierte Hall-Element deaktiviert wurde, so daß mehrere Hall-Elemente mit zugehöriger Speicherbaugruppe zeitlich überlappend aktiviert sind. Dadurch läßt sich ein beliebiger Kompromiß zwischen Verarbeitungsgeschwindigkeit und niedrigem Stromverbrauch erreichen, je nachdem wieviele Hall-Elemente gleichzeitig aktiviert sind. Auch bei dieser Alternative ist für jede Kombination aus Hall-Element und Speicherbaugruppe eine separate Datenleitung vorzusehen.

In einer möglichen vorteilhaften Ausgestaltung der Erfindung wird der Steuereinheit ST ein Signal zugeleitet, das die Geschwindigkeit V der Positionsänderung, bei einem Drehgeber die Winkelgeschwindigkeit, quantifiziert. Dieses Signal kann beispielsweise das Ausgangssignal D1 des ersten Hall-Elements HE1 sein.

Die Steuereinheit ST vergleicht dann, ob die Geschwindigkeit V der Positionsänderung größer einem ersten Schwellwert Vmax1 ist. Falls dies der Fall ist, wird durch die Steuereinheit ST an den Schalter S1 ein Steuersignal ausgegeben, das den Schalter S1 umschaltet, wodurch die Speicherbaugruppe SP1 überbrückt wird. Es wird dann unmittelbar das Ausgangssignal D1 des Hall-Elements HE1 ohne Zwischenspeicherung ausgegeben. Es kann an die Speicherbaugruppe SP1, die nun nicht benötigt wird, von der Steuereinheit ST ein Signal zu deren Deaktivierung ausgegeben werden. Dabei wird der erste Schwellwert Vmax1 derart gewählt, daß bei dessen Überschreiten die Geschwindigkeit V der Positionsänderung so groß ist, daß eine Zwischenspeicherung nicht mehr erforderlich ist, weil das Ausgangssignal D1 permanent vorliegt.

Falls der erste Schwellwert Vmax1 überschritten wurde, wird geprüft, ob auch ein zweiter Schwellwert Vmax2 überschritten wird. Ist das der Fall, so wird auch der zweite Schalter S2 umgeschaltet, wodurch die Speicherbaugruppe SP2 überbrückt wird. Es wird dann unmittelbar auch das Ausgangssignal D2 des Hall-Elements HE2 ohne Zwischenspeicherung ausgegeben. Es kann auch an die Speicherbaugruppe SP2, die nun nicht benötigt wird, durch die Steuereinheit ST ein Signal zu deren Deaktivierung ausgegeben werden. Dabei wird der zweite Schwellwert Vmax2 ähnlich dem ersten Schwellwert Vmax1 so gewählt, daß bei dessen Überschreiten die Geschwindigkeit V der Positionsänderung so groß ist, daß eine Zwischenspeicherung nicht mehr erforderlich ist, weil das Ausgangssignal D1 permanent vorliegt. In der Regel wird der zweite Schwellwert Vmax2 doppelt so groß sein wie der erste Schwellwert Vmax1, da die Änderung des Magnetfeldes am Hall-Element HE1 die doppelte Frequenz aufweist wie die Änderung des Magnetfeldes am Hall-Element HE2.

Dieser Vorgang der Umschaltung der Ausgangssignale von Hall-Elementen kann für alle Hall-Elemente HE1 bis HE18 durchgeführt werden, die aufgrund der für den Drehgeber vorgesehenen Maximaldrehzahl praktisch permanent ein Ausgangssignal ausgeben und für die daher keine Zwischenspeicherung erforderlich ist. Die weiteren erforderlichen Schwellwerte Vmax3, Vmax4, usw. werden entsprechend dem obigen Beispiel doppelt so groß wie der jeweils vorhergehende Schwellwert gewählt.

Unmittelbar nach Unterschreiten eines der Schwellwerte für die Geschwindigkeit der Positionsänderung wird der dem jeweiligen Schwellwert zugeordnete Schalter wieder umgeschaltet und die zugeordnete Speicherbaugruppe wieder aktiviert.

Eine weitere vorteilhafte Ausgestaltung besteht darin, mehrere magnetische Teilungen T vorzusehen, wodurch Auflösung und/oder Wertebereich des Drehgebers für jede zusätzliche Teilungsspur um den Faktor 2 erweitert werden können. Dabei wird die Drehbewegung entsprechend der Anzahl vorhandener Teilungsspuren über ein Getriebe untersetzt oder bei einer entsprechenden Anordnung der Teilungen gegebenenfalls auch übersetzt. Wie bereits bei der Kopplung zwischen optischer und magnetischer Teilung T beschrieben, muß für jede Teilungsspur mit einem digitalen Code die Drehzahl um den Faktor 2 untersetzt an den nächste Teilung T weitergeleitet werden. Sind also auf einer ersten Teilung T vier Teilungsspuren TS1 - TS4 vorgesehen, muß die Drehbewegung dieser ersten Teilung T für eine zweite Teilung T mit dem Faktor 2⁴ untersetzt werden.

Die Häufigkeit, mit der die einzelnen Hall-Elemente HE1 - HE18 aktiviert werden, wird abhängig von der Frequenz deren Ausgangssignale gewählt. Da das Ausgangssignal des Hall-Elements HE1 die größte Frequenz aufweist, wird es am häufigsten aktiviert und tritt daher in der Reihenfolge der von der Steuereinheit ST im wesentlichen sequentiell aktivierten Hall-Elemente am häufigsten auf. Das Ausgangssignal des Hall-Elements HE2 weist die halbe Frequenz des Ausgangssignals des Hall-Elements HE 1 auf und tritt daher in der Reihenfolge nur halb so häufig auf wie das Hall-Element HE1. Für die weiteren Hall-Elemente gilt entsprechendes. Mit der Zusatzbedingung, daß zwei Aktivierungen ein und desselben Hall-Elements HE1 - HE18 möglichst immer den gleichen zeitlichen Abstand voneinander haben sollen, wird eindeutig die Reihenfolge definiert, in der die Steuereinheit ST die einzelnen Hall-Elemente HE1 - HE18 aktiviert.

## Patentansprüche

1. Verfahren zum Betrieb eines Positionsgebers, insbesondere Drehgebers, welcher mehrere Hall-Elemente (HE1 - HE18) aufweist, die in einer vorgegebenen Reihenfolge selektiv aktiviert und deaktiviert werden,
**dadurch gekennzeichnet,**
**daß** eine jedem Hall-Element (HE1 - HE18) zugeordnete Baugruppe (SP1 - SP18) zur Speicherung dessen Ausgangssignals (D1 - D18) aktiviert wird.

2. Verfahren nach Anspruch 1, **dadurch gekennzeichnet, daß** die Reihenfolge, in der einzelne Hall-Elemente (HE1 - HE18) aktiviert werden, abhängig von der Frequenz ihres Ausgangssignals (D1 - D18) festgelegt wird und daß das Hall-Element (HE1), dessen Ausgangssignal (D1) die höchste Frequenz aufweist, am häufigsten in die Reihenfolge eingefügt wird.

3. Verfahren nach Anspruch 1 oder 2, **dadurch gekennzeichnet, daß** die jedem Hall-Element (HE1 - HE18) zugeordnete Baugruppe (SP1 - SP18) zur Speicherung dessen Ausgangssignals (D1 - D18) mit einer zeitlichen Verzögerung (Δt) zum zugehörigen Hall-Element (HE1 - HE18) aktiviert wird.

4. Verfahren nach einem der Ansprüche 1 bis 3, **dadurch gekennzeichnet, daß** die Deaktivierung der Hall-Elemente (HE1 - HE18) mit einer konstanten zeitlichen Verzögerung zu ihrer jeweiligen Aktivierung erfolgt.

5. Verfahren nach Anspruch 3 oder 4, **dadurch gekennzeichnet, daß** die zeitliche Verzögerung (Δt) zwischen Aktivierung eines Hall-Elements (HE1 - HE18) und Speicherung dessen Ausgangssignals (D1 - D18) kleiner ist als die zeitliche Verzögerung zur Deaktivierung des Hall-Elements (HE1 - HE18).

6. Verfahren nach einem der Ansprüche 1 bis 5, **dadurch gekennzeichnet, daß** das nächste Hall-Element (HE2 - HE18) aktiviert wird, unmittelbar nachdem das davor aktivierte Hall-Element (HE1 - HE18) deaktiviert wurde oder daß das nächste Hall-Element (HE2 - HE18) aktiviert wird, bevor mindestens ein Hall-Element (HE1 - HE17) deaktiviert wurde.

7. Verfahren nach einem der Ansprüche 1 bis 6, **dadurch gekennzeichnet, daß** einem oder mehreren Hall-Elementen (HE1 - HE18) jeweils ein Schwellwert (Vmax1 - Vmax18) für die Geschwindigkeit (V) der Positionsänderung zugeordnet wird, bei dessen Überschreitung die dem jeweiligen Hall-Element (HE1 - HE18) zugeordnete Speicherbaugruppe (SP1 - SP18) deaktiviert und der zugeordnete Schalter (S1 - S18) umgeschaltet wird und bei dessen Unterschreitung die Speicherbaugruppe (SP1 - SP18) wieder aktiviert und der Schalter (S1 - S18) wieder umgeschaltet wird.

8. Verfahren nach einem der Ansprüche 1 bis 7, **dadurch gekennzeichnet, daß** einem Hall-Element (HE1 - HE18) oder einer Speicherbaugruppe (SP1 - SP18) im deaktivierten Zustand keine elektrische Leistung zugeleitet wird.

9. Verfahren nach einem der Ansprüche 1 bis 8, **dadurch gekennzeichnet, daß** die Hall-Elemente (HE1 - HE18) beim Anschalten des Positionsgebers an die Versorgungsspannung aktiviert werden und eine absolute Position ausgeben.

10. Positionsgeber, insbesondere Drehgeber, welcher mehrere Hall-Elemente (HE1 - HE18) und eine Steuereinheit (ST) zur selektiven Aktivierung und Deaktivierung der Hall-Elemente (HE1 - HE18) aufweist, wobei jedes Hall-Element (HE1 - HE18) über eine Steuerleitung mit der Steuereinheit (ST) verbunden ist,
**dadurch gekennzeichnet,**
**daß** jedes Hall-Element (HE1 - HE18) über eine Datenleitung (DL) mit je einer Speicherbaugruppe (SP1 - SP18) verbunden ist, daß jede Speicherbaugruppe (SP1 - SP18) über eine Steuerleitung mit der Steuereinheit (ST) verbunden ist.

11. Positionsgeber nach Anspruch 10, **dadurch gekennzeichnet, daß** die Steuereinheit (ST) Mittel aufweist, um die Reihenfolge, in der einzelne Hall-Elemente (HE1 - HE18) aktiviert werden, abhängig von der Frequenz ihres Ausgangssignals (D1 - D18) zu bestimmen und daß die Steuereinheit (ST) Mittel aufweist, durch die das Hall-Element (HE1), dessen Ausgangssignal (D1) die höchste Frequenz aufweist, am häufigsten aktiviert wird.

12. Positionsgeber nach Anspruch 10 oder 11, **dadurch gekennzeichnet, daß** eine einzige Datenleitung (DL) alle Hall-Elemente (HE1 - HE18) mit allen Speicherbaugruppen (SP1 - SP18) verbindet.

13. Positionsgeber nach einem der Ansprüche 10 bis 12, **dadurch gekennzeichnet, daß** die Steuereinheit (ST) ausgestaltet ist, um die Geschwindigkeit (V) der Positionsänderung aufgrund der Frequenz eines der Ausgangssignale (D1 - D18) der Hall-Elemente (HE1- HE18) zu ermitteln.

14. Positionsgeber nach Anspruch 13, **dadurch gekennzeichnet, daß** die Steuereinheit (ST) derart ausgestaltet ist, daß bei Überschreiten eines oder mehrerer Schwellwerte (Vmax1 - Vmax18) für die Geschwindigkeit der Positionsänderung entsprechend ein oder mehrere Speicherbaugruppen (SP1 - SP18) deaktiviert werden, daß Schalter (S1 - S18) vorgesehen sind, die durch die Steuereinheit (ST) gesteuert die Ausgangssignale (D1 - D18) umschalten und daß bei Unterschreiten eines oder mehrerer Schwellwerte (Vmax1 - Vmax18) für die Geschwindigkeit der Positionsänderung ein oder mehrere Speicherbaugruppen (HE1 - HE18) wieder aktiviert werden und Schalter (S1 - S18) wieder umgeschaltet werden.

15. Positionsgeber nach einem der Ansprüche 10 bis 14, **dadurch gekennzeichnet, daß** die Steuersignalleitung, welche die Steuereinheit (ST) mit einem Hall-Element (HE1 - HE18) verbindet, über einen Verzögerer (Δt) auch mit der dem Hall-Element (HE1 - HE18) zugeordneten Speicherbaugruppe (SP1 - SP18) verbunden wird.

16. Positionsgeber nach einem der Ansprüche 10 bis 15, **dadurch gekennzeichnet, daß** ein Hall-Element (HE1 - HE18) durch eine Gruppe aus mehreren Hall-Elementen realisiert wird.

17. Positionsgeber nach einem der Ansprüche 10 bis 16, **dadurch gekennzeichnet, daß** der Positionsgeber ein Absolutwertgeber ist.

18. Positionsgeber nach einem der Ansprüche 10 bis 17, **dadurch gekennzeichnet, daß** der Positionsgeber zusätzlich zu mindestens einer magnetischen Teilung (T) mindestens eine optische Teilung aufweist.

19. Positionsgeber nach einem der Ansprüche 10 bis 18, **dadurch gekennzeichnet, daß** der Positionsgeber ein Drehgeber ist und ein Getriebe aufweist, welches die Drehbewegung untersetzt.

20. Positionsgeber nach Anspruch 19, **dadurch gekennzeichnet, daß** ein mehrstufiges Getriebe die Drehbewegung der optischen Teilung auf mehrere rotationssymmetrische magnetische Teilungen (T) mit jeweils mehreren Teilungsspuren (TS1 - TS4) untersetzt.

## Claims

1. A method of operating a position transducer, especially a rotary transducer, which comprises a plurality of Hall elements (HE1 - HE18) which are selectively activated and deactivated in a predetermined sequence, **characterized in that** a module (SP1 - SP18) associated with each Hall element (HE1 - HE18) is activated for storing its output signals (D1 - D18).

2. A method according to claim 1, **characterized in that** the sequence in which individual Hall elements (HE1 - HE18) are activated is determined in dependence on the frequency of the element's output signal (D1 - D18) and **in that** the Hall element (HE1) whose output signal (D1) has the highest frequency is introduced the most frequently in the sequence.

3. A method according to claim 1 or 2, **characterized in that** the module (SP1 - SP18) associated with each Hall element (HE1 - HE18) for storing its output signal (D1 - D18) is activated with a time delay (Δt) to the associated Hall element (HE1 - HE18).

4. A method according to any of claims 1 to 3, **characterized in that** the deactivating of the Hall elements (HE1 - HE18) is effected with a constant time delay to their respective actuations.

5. A method according to claim 3 or 4, **characterized in that** the time delay (Δt) between the activation of a Hall element (HE1 - HE18) and storage of its output signal (D1 - D18) is smaller than the time delay for deactivating the Hall element (HE1 - HE18).

6. A method according to any of claims I to 5, **characterized in that** the next Hall element (HE2 - HE18) is activated directly after the previously activated Hall element (HE1 - HE18) has been deactivated or **in that** the next Hall element (HE2 - HE18) is activated before at least one Hall element (HE1 - HE17) has been deactivated.

7. A method according to any of claims 1 to 6, **characterized in that** a respective threshold (Vmax1 - Vmax18 for the speed (V) of the change of position is associated with one or more of the Hall elements (HE1 - HE18) and when it is exceeded the storage module associated with the respective Hall element (HE1 - HE18) is deactivated and the associated switch (S1 - S18) is changed over and when it is fallen below the storage module (SP1 - SP18) is activated again and the switch (S1 - S18) is changed over again.

8. A method according to any of claims 1 to 7, **characterized in that** no electric power is fed to a Hall element (HE1 - HE18) or a storage module (SP1 - SP18) in the deactivated state.

9. A method according to any of claims 1 to 8, **characterized in that** the Hall elements (HE1 - HE18) are activated in switching the position transducer on to the supply voltage and provide and absolute position.

10. A position transducer, especially a rotary transducer, which comprises a plurality of Hall elements (HE1 - HE18) and a control unit (ST) for selectively activating and deactivating the Hall elements (HE1 - HE18), wherein each Hall element (HE1 - HE18) is connected to the control unit (ST) by a control line, **characterized in that** each Hall element (HE1 - HE18) is connected to a respective storage module (SP1 - SP18) by a data line (DL), and **in that** each storage module (SP1 - SP18) is connected to the control unit (ST) by a control line.

11. A position transducer according to claim 10, **characterized in that** the control unit (ST) comprises means to determine the sequence in which the individual Hall elements (HE1 - HE18) are activated in dependence on the frequency of its output signal (D1 - D18) and **in that** the control unit (ST) comprises means through which the Hall element (HE1) whose output signal (D1) has the highest frequency is activated the most frequently.

12. A position transducer according to claim 10 or 11, **characterized in that** a single data line (DL) connects all Hall elements (HE1 - HE18) to all storage modules (SP1 - SP18).

13. A position transducer according to any of claims 10 to 12, **characterized in that** the control unit (ST) is arranged to determine the speed (V) of the change of position on the basis of the frequency of one of the output signals (D1 - D18) of the Hall elements (HE1 - HE18).

14. A position transducer according to claim 13, **characterized in that** the control unit (ST) is so arranged that, when one or more threshold values (Vmax 1- Vmax18) for the speed of the change of position is exceeded, one or more storage modules (SP1 - SP18) are correspondingly deactivated, **in that** switches (S1 - S18) are provided, which switch over the output signals (D1 - D18) under control of the control unit (ST), and **in that** when one or more threshold values (Vmax1 - Vmax18) for the speed of change of position is fallen below, one or more storage modules (SP1 - SP18) are activated again and switches (S1 - S18) changed over again.

15. A position transducer according to any of claims 10 to 14, **characterized in that** the control signal line which connects the control unit (ST) to a Hall element (HE1 - HE18) is also connected to the storage module (SP1 - SP18) associated with the Hall element (HE1 - HE18) through a delay element (Δt).

16. A position transducer according to any of claims 10 to 15, **characterized in that** a Hall element (HE1 - HE18) is realised by a group of several Hall elements.

17. A position transducer according to any of claims 10 to 16, **characterized in that** the position transducer is an absolute value transducer.

18. A position transducer according to any of claims 10 to 17, **characterized in that** the position transducer comprises at least one optical graduation in addition to at least one magnetic graduation (T).

19. A position transducer according to any of claims 10 to 18, **characterized in that** the position transducer is a rotary transducer and comprises a gear which steps down the rotary motion.

20. A position transducer according to claim 19, **characterized in that** a multi-stage gear steps down the rotary motion of the optical graduation to a plurality of magnetic graduations (T) with rotational symmetry, with a plurality of sub-tracks (TS1 - TS4) each.

## Revendications

1. Procédé d'exploitation d'un capteur de position, en particulier d'un capteur rotatif, comprenant plusieurs éléments à effet Hall (HE1-HE18) qui sont sélectivement activés et désactivés en une séquence dans un ordre prédéterminé, **caractérisé par le fait qu'**un module (SP1-SP18) associé à chaque élément à effet Hall (HE1-HE18) est activé en vue de la mémorisation du signal de sortie (D1-D18) de ce dernier.

2. Procédé suivant la revendication 1, **caractérisé par le fait que** l'ordre dans lequel des éléments à effet Hall (HE1-HE18) individuels sont activés est déterminé en fonction de la fréquence de leur signal de sortie (D1-D18) et que l'élément à effet Hall (HE1) dont le signal de sortie (D1) présente la fréquence la plus élevée est inséré 1e plus fréquemment dans la séquence.

3. Procédé suivant la revendication 1 ou 2, **caractérisé par le fait que** le module (SP1-SP18) associé à chaque élément à effet Hall (HE1-HE18) en vue de la mémorisation du signal de sortie (D1-D18) de ce dernier est activé avec un retard temporel (Δt) par rapport à l'élément à effet Hall (HE1-HE18) associé.

4. Procédé suivant l'une des revendications 1 à 3, **caractérisé par le fait que** la désactivation des éléments à effet Hall (HE1-HE18) a lieu avec un retard temporel constant par rapport à leur activation respective.

5. Procédé suivant la revendication 3 ou 4, **caractérisé par le fait que** le retard temporel (Δt) entre l'activation d'un élément à effet Hall (HE1-HE18) et la mémorisation du signal de sortie (D1-D18) de ce dernier est plus court que le retard temporel pour la désactivation de l'élément à effet Hall (HE1-HE18).

6. Procédé suivant l'une des revendications 1 à 5, **caractérisé par le fait que** l'élément à effet Hall (HE2-HE18) suivant est activé immédiatement après que l'élément à effet Hall (HE1-HE18) préalablement activé ait été désactivé ou que l'élément à effet Hall (HE2-HE18) suivant est activé avant qu'au moins un élément à effet Hall (HE1-HE17) ait été désactivé.

7. Procédé suivant l'une des revendications 1 à 6, **caractérisé par le fait qu'**une valeur de seuil (Vmax1-Vmax 18) pour la vitesse (V) de changement de position est associé respectivement à un ou plusieurs éléments à effet Hall (HE1-HE18), valeur lors du franchissement vers le haut de laquelle le module de mémoire (SP1-SP18) associé à l'élément à effet Hall (HE1-HE18) respectif est désactivé et le commutateur (S1-S18) associé est commuté et lors du franchissement vers le bas de laquelle le module de mémoire (SP1-SP18) est de nouveau activé et le commutateur (S1-S18) est de nouveau commuté.

8. Procédé suivant l'une des revendications 1 à 7, **caractérisé par le fait qu'**un élément à effet Hall (HE1-HE18) ou un module de mémoire (SP1-SP18) ne reçoit pas d'énergie électrique à l'état désactivé.

9. Procédé suivant l'une des revendications 1 à 8, **caractérisé par le fait que** les éléments à effet Hall (HE1-HE18), lors du branchement du capteur de position sur la tension d'alimentation, sont activés et transmettent une position absolue.

10. Capteur de position, en particulier capteur rotatif, comprenant plusieurs éléments à effet Hall (HE1-HE18) et une unité de commande (ST) pour l'activation et désactivation sélective des éléments à effet Hall (HE1-HE18), chaque élément à effet Hall (HE1-HE18) étant relié par une ligne de commande à l'unité de commande (ST),
**caractérisé par le fait**
**que** chaque élément à effet Hall (HE1-HE18) est relié par une ligne de données (DL) respectivement à un module de mémoire (SP1-SP18) et que chaque module de mémoire (SP1-SP18) est relié par une ligne de commande à l'unité de commande (ST).

11. Capteur de position suivant la revendication 10, **caractérisé par le fait que** l'unité de commande (ST) comprend des moyens pour déterminer l'ordre dans lequel les différents éléments à effet Hall (HE1-HE18) sont activés, en fonction de la fréquence du signal de sortie (D1-D18) de ces derniers, et que l'unité de commande (ST) comprend des moyens par lesquels l'élément à effet Hall (HE1) dont le signal de sortie (D1) présente la fréquence la plus élevée est activé le plus fréquemment.

12. Capteur de position suivant la revendication 10 ou 11, **caractérisé par le fait qu'**une unique ligne de données (DL) relie tous les éléments à effet Hall (HE1-HE18) à tous les modules de mémoire (SP1-SP18).

13. Capteur de position suivant l'une des revendications 10 à 12, **caractérisé par le fait que** l'unité de commande (ST) est conçue pour déterminer la vitesse (V) du changement de position sur la base de la fréquence d'un des signaux de sortie (D1-D18) des éléments à effet Hall (HE1-HE18) (HE1-HE18).

14. Capteur de position suivant la revendication 13, **caractérisé par le fait que** l'unité de commande (ST) est conçue de manière que lors du franchissement vers le haut d'une ou de plusieurs valeurs de seuil (Vmax1-Vmax18) pour la vitesse de changement de position, un ou plusieurs modules de mémoire (SP1-SP18) soient désactivés, que des commutateurs (S1-S18) sont prévus qui, commandés par l'unité de commande (ST), commutent les signaux de sortie (D1-D18), et que lors du franchissement vers le bas d'une ou de plusieurs valeurs de seuil (Vmax1-Vmax18) pour la vitesse de changement de position, un ou plusieurs modules de mémoire (SP1-SP18) et commutateurs (S1-S18) soient de nouveau activés et de nouveau commutés.

15. Capteur de position suivant l'une des revendications 10 à 14, **caractérisé par le fait que** la ligne de signaux de commande qui relie l'unité de commande (ST) à un élément à effet Hall (HE1-HE18) est reliée par un temporisateur (Δt) également au module de mémoire (SP1-SP18) associé à l'élément à effet Hall (HE1-HE18).

16. Capteur de position suivant l'une des revendications 10 à 15, **caractérisé par le fait qu'**un élément à effet Hall (HE1-HE18) est réalisé par un groupe de plusieurs éléments à effet Hall.

17. Capteur de position suivant l'une des revendications 10 à 16, **caractérisé par le fait que** le capteur de position est un capteur de valeur absolue.

18. Capteur de position suivant l'une des revendications 10 à 17, **caractérisé par le fait que** le capteur de position présente, en plus d'au moins une division magnétique (T), au moins une division optique.

19. Capteur de position suivant l'une des revendications 10 à 18, **caractérisé par le fait que** le capteur de position est un capteur rotatif et présente un réducteur qui démultiplie le mouvement de rotation.

20. Capteur de position suivant la revendication 19, **caractérisé par le fait qu'**un réducteur à plusieurs étages démultiplie le mouvement de rotation de la division optique sur plusieurs divisions magnétiques (T) à symétrie de révolution ayant chacune plusieurs pistes de divisions (TS1-TS2).
